# EUROPÄISCHE PATENTSCHRIFT

(11) **EP 2 570 221 B1**
(45) Veröffentlichungstag und Bekanntmachung des Hinweises auf die Patenterteilung: **30.10.2019**
(21) Anmeldenummer: 12184674.5
(22) Anmeldetag: 17.09.2012
(51) Int. Cl.: B23F 23/12, B23F 1/02, B23F 5/02

(54) **Verfahren zum Schleifbearbeiten von einer als Außen- oder Innenverzahnung ausgebildeten Verzahnung eines Werkstücks**
Method of grinding the teeth of an external or internally toothed gear
Procédé de rectification d'une denture d'une pièce à usiner conçue comme une denture intérieure ou extérieure

(30) Priorität: 16.09.2011 DE 102011053714
(43) Veröffentlichungstag der Anmeldung: 20.03.2013
(73) Patentinhaber: Präwema Antriebstechnik GmbH, 37269 Eschwege/Werra (DE)
(72) Erfinder: Holderbein, Walter, 37269 Eschwege (DE); Reinhardt, Jörg, 99826 Berka v.d.H. (DE)
(74) Vertreter: Cohausz & Florack

(56) Entgegenhaltungen:
- DE-A1- 3 132 496
- DE-A1- 3 228 296
- DE-A1- 19 910 746
- DE-A1- 19 910 747
- US-A- 4 339 895

## Beschreibung

Die Erfindung betrifft ein Verfahren zum Schleifbearbeiten von einer als Außen- oder Innenverzahnung ausgebildeten Verzahnung eines Werkstücks.

Im Zuge dieses Verfahrens wird eine um eine Werkzeugdrehachse rotierendes Schleifscheibe mit einem an seinem Umfang ausgeformten Profil durch Verstellung entlang einer quer zur Werkzeugdrehachse ausgerichteten Zustellachse in schleifenden Eingriff mit mindestens einem der jeweils eine Zahnlücke der Verzahnung begrenzenden Zähne des Werkstücks gebracht.

Im Fall des Abrichtens bei laufender Schleifbearbeitung erfolgt das zur Einhaltung der vorgeschriebenen Profilform erforderliche Abrichten der Schleifscheibe vorzugsweise mittels einer um eine Abrichterachse rotierenden und in Eingriff mit der Schleifscheibe gebrachten Abrichtrolle. Alternativ kann das Abrichten jedoch mit Hilfe eines nicht rotierenden, feststehenden Abrichtwerkzeugs durchgeführt werden.

Die Schleifscheibe ist üblicherweise um eine Schwenkachse verschwenkbar, die achsparallel zu der Zustellachse ausgerichtet ist.

Aus KLOCKE: Fritz Klocke, Wilfried König "Fertigungsverfahren Schleifen, Läppen, Honen", 4. Auflage, Springer-Verlag Berlin Heidelberg, 2005, Seiten 171 - 173, ist es bekannt, dass ein in Folge hoher Schleifscheibenbelastungen nach kurzer Zeit eintretender Schleifscheibenverschleiß und die damit einhergehenden unzulässigen Profilabweichungen an der Schleifscheibe und damit am zu bearbeitenden Werkstück auf besonders wirtschaftliche Weise dadurch ausgeglichen werden können, dass mit Hilfe einer Abrichtprofilrolle, die mindestens so breit ist wie die jeweilige Schleifscheibe, das Schleifwerkzeug während der Bearbeitung abgerichtet wird. Auf diese Weise lässt sich das Profil der Schleifscheibe ständig regeneriert und so bei hohen Zerspanungsleistungen eine hohe Profilgenauigkeit erreichen. Des Weiteren kommen durch den fortlaufenden Abrichtvorgang immer neue scharfe Schneidkörner der Schleifscheibe zum Schleifeinsatz, wodurch sich die Zerspanleistungen weiter erhöhen.

Für das im laufenden Betrieb erfolgende Abrichten kann die Abrichtprofilrolle bei der voranstehend erläuterten Vorgehensweise kontinuierlich im Eingriff mit der abzurichtenden Schleifscheibe gehalten werden oder es wird ein diskontinuierliches Abrichten durchgeführt, bei dem zwar ebenfalls während des Schleifens abgerichtet wird, jedoch nicht kontinuierlich, sondern nur nach bestimmten Zeitintervallen. Unabhängig davon, ob das Abrichten während der Schleifbearbeitung kontinuierlich oder diskontinuierlich durchgeführt wird, ist das mit einer Schleifscheibe während des Bearbeitungsprozesses maximal erreichbare Zerspanungsvolumen nur noch vom abrichtbaren Schleifscheibenvolumen abhängig, da für das Abrichten der Schleifscheibe keine zusätzlichen Zeiten benötigt werden.

Allerdings verringert sich der Durchmesser der Schleifscheibe im Schleifbetrieb in Folge des dabei unvermeidbaren Verschleißes stetig. Verstärkt wird dieser Verschleiß dadurch, dass auch beim Abrichten Material der Schleifscheibe abgetragen werden muss, um die geforderte Form des an der Schleifscheibe vorhandenen Profils abzubilden.

Als Werkzeuge zum Abrichten werden üblicherweise Abrichtprofilwerkzeuge oder Abrichtformwerkzeuge eingesetzt. Abhängig von der Gestaltung der jeweiligen Schleifmaschine wird das jeweilige Abrichtwerkzeug dabei entweder feststehend, so dass die erforderliche Relativbewegung zwischen Abrichter und Schleifscheibe alleine von der Schleifscheibe ausgeführt wird, oder als drehend angetriebene Abrichterrolle eingesetzt, so dass während des Abrichtprozesses sowohl das jeweilige Abrichtwerkzeug als auch die Schleifscheibe in Bewegung sind.

Abrichtprofilwerkzeuge tragen ein Negativprofil der Schleifscheibe, wobei dieses Negativprofil abhängig von der jeweiligen Abrichtstrategie exakt oder mit einer bestimmten Abweichung an das Profil der Schleifscheibe angepasst ist. Durch radiale Zustellung bildet sich das Profil des Abrichtprofilwerkzeugs auf der Schleifscheibe ab. Der Vorteil von Abrichtprofilwerkzeugen, insbesondere Abrichtprofilrollen, besteht dabei darin, dass mit ihnen hohe Abbildungsgenauigkeiten und kurze Abrichtzeiten erreicht werden können. Da Abrichtprofilwerkzeuge jedoch jeweils nur ein Verzahnungsprofil abbilden können, steht dieser hohen Effizienz eine geringe Flexibilität gegenüber. Deshalb werden Abrichtprofilwerkzeuge in der Regel in der Massenfertigung verwendet, bei der ausreichend große Stückzahlen zu verarbeiten sind.

Flexibler einsetzen lassen sich Abrichtformwerkzeuge. Diese sind an ihrem Umfang nach Art einer Schneide ausgebildet. Die an der Schleifscheibe abzubildende Profilform wird dabei durch eine entsprechende Bewegung des Abrichtformwerkzeugs entlang der vorgegebenen Kontur erzeugt. Auf diese Weise lassen sich mit einem Abrichtformwerkzeug unterschiedliche Profile erzeugen. Voraussetzung dazu ist allerdings, dass das Abrichtformwerkzeug in ausreichend vielen Freiheitsgraden mittels geeigneter Antriebe beweglich ist und eine Steuerung zur Verfügung steht, die die erforderlichen Bewegungen koordiniert. Der durch den Einsatz eines Abrichtformwerkzeugs gewonnenen Flexibilität stehen daher ein größerer maschineller Aufwand und längere Abrichtzeiten gegenüber [KLOCKE: Abschnitt 6.1.1.2].

Bei Schleifscheiben, die zum Schleifen von Verzahnungen eingesetzt werden, verändert sich in Folge eines kontinuierlich erfolgenden Abrichtens die Form des am Umfang der Schleifscheibe vorgesehenen Profils im Laufe der Schleifbearbeitung. Diese Änderung bringen Abweichungen des am zu schleifenden Werkstück abzubildenden Profils von der Sollvorgabe mit sich.

Um diese Abweichungen auszugleichen, ist in der EP 1 312 445 B1 ein System zum Profilschleifen einer Verzahnung vorgeschlagen worden, bei dem ein Softwaremodul ein oder mehrere Korrekturverfahren durchführen kann, um die während der Schleifbearbeitung und dem gleichzeitig erfolgenden Abrichten erzeugten Profilungenauigkeiten zu reduzieren. Eingesetzt wird dazu eine drehangetriebene Formrolle, die mit ihrem Drehantrieb an einem in mehreren Achsen verstellbaren Schlitten gelagert ist. Jedoch bleibt unklar, wie die erwähnten Korrekturen in der Praxis durchgeführt werden müssen, um die angestrebte Minimierung der Formabweichungen zu erreichen.

Eine andere Maschine zur Schleifbearbeitung einer Verzahnung ist in der EP 2 255 910 A1 vorgestellt worden. Diese Maschine weist ein zusätzliches Drehlager zum Verschwenken des Schleifwerkzeugs auf. Gleichzeitig ist eine Abrichteinheit im Drehzentrum der Schwenkachse des Schleifwerkzeugs so gelagert, dass die Abrichteinheit zusammen mit dem Schleifwerkzeug um die gemeinsame Schwenkachse verschwenkbar ist. Die Abrichteinheit ist dabei nach Art einer Formrolle ausgebildet. Durch diese dauerhaft feste Verkopplung von Abricht- und Schleifwerkzeug sind Differenzen zwischen den Positionen des Schleifwerkzeuges zum Zeitpunkt des Abrichtens und zum Zeitpunkt des Schleifens ausgeschlossen. Jedoch berücksichtigt diese Lösung die bei einem kontinuierlichen Abrichten im Betrieb auftretenden Profilabweichungen nicht.

Des Weiteren ist aus der US 4,339,895 A eine Zahnradschleifmaschine mit einem Werkstückträger und einer Werkzeugbasis bekannt, die in Bezug aufeinander für Teilbewegungen des Werkstücks, zum Einstellen der Verzahnungsdaten für Bewegungen zur Ausbildung eines Zahnprofils, sowie für hin- und hergehende Längshübe längs der zu schleifenden Zahnflanken beweglich sind. Die Maschine umfasst darüber hinaus einen Schleifsupport, der um eine Schwenkachse schwenkbar gelagert ist und an dem eine Schleifscheibe drehantreibbar gelagert ist, deren Drehachse quer zur Schwenkachse verläuft. Dabei ist der Schleifsupport mit der Werkzeugbasis durch einen Schwenkantrieb verbunden, der während des Schleifens einer Zahnflanke willkürliche Veränderungen des Schleifeingriffswinkels zwischen der Schleifscheibe und der Zahnflanke ermöglicht. Bei der Schleifbearbeitung mit dieser Maschine wird die Schleifscheibe laufend um die Schwenkachse hin und her verschwenkt, um auf diese Weise während des Schleifbetriebs den Schleifeingriffswinkel zwischen Schleifscheibe und Zahnflanke ständig zu ändern. Durch die ständige Schwenkbewegung sollen ein erhöhter Späneabtransport und eine insgesamt verbesserte Schleifleistung erzielt werden.

Vor dem Hintergrund des voranstehend erläuterten Standes der Technik bestand die Aufgabe der Erfindung darin, ein Verfahren zum Schleifbearbeiten zur Verfügung zu stellen, bei dem während der laufenden Schleifbearbeitung das Schleifwerkzeug abgerichtet wird und bei dem dennoch auf einfache Weise die Entstehung von Profilabweichungen an der zu schleifenden Verzahnung auf ein Minimum reduziert sind.

Erfindungsgemäß ist diese Aufgabe durch das in Anspruch 1 angegebene Verfahren gelöst worden.

Vorteilhafte Ausgestaltungen der Erfindung sind in den abhängigen Ansprüchen angegeben und werden nachfolgend wie der allgemeine Erfindungsgedanke im Einzelnen erläutert.

Beim erfindungsgemäßen Verfahren für eine Schleifbearbeitung von einer als Außen- oder Innenverzahnung ausgebildeten Verzahnung eines Werkstücks, wird in Übereinstimmung mit dem voranstehend erläuterten Stand der Technik ein um eine Werkzeugdrehachse rotierendes Schleifwerkzeug mit einem an seinem Umfang ausgeformten Profil durch Verstellung entlang einer quer zur Werkzeugdrehachse ausgerichteten Zustellachse in schleifenden Eingriff mit mindestens einem der jeweils eine Zahnlücke der Verzahnung begrenzenden Zähne des Werkstücks gebracht und es wird das Profil der Schleifscheibe bei laufender Schleifbearbeitung mittels einem in Eingriff mit der Schleifscheibe gebrachten Abrichtprofilwerkzeug abgerichtet, wobei die Schleifscheibe um eine Schwenkachse verschwenkbar ist, die achsparallel zu der Zustellachse ausgerichtet ist.

Erfindungsgemäß wird nun ausgehend von der Schwenkstellung bei Neuzustand der Schleifscheibe nach einem Abrichtvorgang oder mehreren Abrichtvorgängen der Schwenkwinkel um die Schwenkachse in Abhängigkeit von der Verminderung des Schleifscheibendurchmessers zunehmend größer eingestellt, um dadurch die Verzahnungsabweichungen, die durch die Verkleinerung des Schleifscheibendurchmessers entstehen, zu kompensieren. Die Erfindung geht hierbei von der Erkenntnis aus, dass bei der Schleifbearbeitung von Verzahnungen mit einem Abrichtprofilwerkzeug in Folge des immer kleiner werdenden Durchmessers der Schleifscheibe auf der Verzahnung eine Profilwinkelabweichung auftritt. Um einen kontinuierlichen Abrichtprozess mit einem Profilabrichtwerkzeug zu realisieren, wird erfindungsgemäß nach einem Abrichtvorgang der Schwenkwinkel der Schleifscheibe in Bezug auf die Werkstücklücke so geändert, dass diese Profilwinkelabweichung kompensiert wird. Dabei hat sich herausgestellt, dass die Profilwinkelabweichung sich durch einen zunehmend größer werdenden Schwenkwinkel wirkungsvoll reduzieren lässt.

Die Schwenkwinkel, um die die Schleifscheibe in erfindungsgemäßer Weise nach einem Abrichtvorgang verschwenkt wird, liegen üblicherweise im Bereich von 0° (Neuzustand der Schleifscheibe) bis 5° (Verschleißgrenze), wobei in der Praxis typischerweise Schwenkwinkel von bis zu 3° ausreichend sind. Entscheidend ist, dass durch eine Anpassung, insbesondere einer Vergrößerung, des Schwenkwinkels im Laufe der Lebensdauer einer Schleifscheibe die mit der zunehmenden Verringerung des Schleifscheibendurchmessers einhergehende Abweichung des Profilwinkels gleichmäßig ausgeglichen werden kann.

Mit der Erfindung steht somit ein Verfahren zur Verfügung, mit dem sich auf konventionellen mit entsprechenden Verstellmöglichkeiten ausgestatteten Schleifmaschinen zeitsparend Verzahnungen schleifen lassen, indem das Abrichten während der Schleifbearbeitung durchgeführt wird und die in Folge des unvermeidbaren Verschleißes der Schleifscheibe und der damit einhergehenden Verminderung des Durchmessers der Schleifscheibe entstehenden Profilwinkelabweichungen durch eine einfache Maßnahme, nämlich eine zunehmende Verstellung des Schwenkwinkels des Schleifwerkzeugs, ausgeglichen wird. Aufwändiger Steuerungen und Verstellmöglichkeiten innerhalb der Maschine bedarf es dazu nicht. Benötigt wird lediglich eine Verschwenkbarkeit der Schleifscheibe um eine Schwenkachse, die quer zur Drehachse der Schleifscheibe bzw. des zu bearbeitenden Werkstücks ausgerichtet ist.

Eine besonders leistungsfähige Ausgestaltung einer erfindungsgemäßen Vorrichtung ist dabei dadurch gekennzeichnet, dass das Abrichtprofilwerkzeug als Abrichtprofilrolle ausgebildet ist, die um eine Abrichterachse rotierend angetrieben ist.

Eine besonders einfache, genau arbeitende und gleichzeitig robuste Ausgestaltung des erfindungsgemäßen Verfahrens ergibt sich dadurch, dass das Abrichtprofilwerkzeug und die Schleifscheibe gemeinsam um die Schwenkachse verschwenkt werden. Durch eine drehfeste Verkopplung des Abrichtprofilwerkzeugs und der Schleifscheibe kann insbesondere das im laufenden Schleifbetrieb erfolgende Abrichten mit besonders geringem Aufwand absolviert werden.

Wie beim Stand der Technik kann auch beim erfindungsgemäßen Verfahren das Abrichtprofilwerkzeug im laufenden Schleifbetrieb kontinuierlich in Eingriff mit der Schleifscheibe gehalten werden. Die erfindungsgemäße Verstellung erfolgt in diesem Fall entweder ebenfalls kontinuierlich oder sie wird schrittweise immer dann ausgeführt, wenn die in Folge des Schleifscheibenverschleißes jeweils eingetretene Profilwinkelabweichung einen vorgegebenen Toleranzbereich verlässt, innerhalb dessen Profilabweichungen noch akzeptabel sind.

Alternativ ist es bei einer diskontinuierlichen Betriebsweise möglich, die Abrichtrolle erst dann in Eingriff mit der abzurichtenden Schleifscheibe zu bringen, wenn sich hierzu aufgrund des bei der Schleifscheibe auftretenden Verschleißfortschritts oder einer signifikanten Veränderung einer anderen Referenzgröße die Notwendigkeit ergibt. Auch hier erfolgt die erfindungsgemäße Änderung des Schwenkwinkels nach dem Abrichten insbesondere dann, wenn sich hierzu aufgrund einer Überschreitung einer Toleranzgrenze die Notwendigkeit ergibt.

Die Verstellung des Schwenkwinkels kann in Abhängigkeit vom jeweils tatsächlich an der Schleifscheibe eingetretenen, mittels geeigneter Messeinrichtungen erfassten Verschleißes erfolgen. Alternativ oder ergänzend kann es jedoch auch zweckmäßig sein, den zu erwartenden Verschleiß einer Schleifscheibe durch empirische Untersuchungen oder geeignete Simulationen zu ermitteln und ausgehend davon die Schwenkwinkel zu bestimmen, um die die Schleifscheibe nach dem jeweils erforderlichen Abrichtvorgang verschwenkt wird.

Durch den Einsatz eines insbesondere als Abrichtprofilrolle ausgebildeten Abrichtprofilwerkzeugs, das die Form des zu bearbeitenden Werkstücks hat, lassen sich in erfindungsgemäßer Weise große Stückzahlen von Werkstücken besonders zeitsparend und damit wirtschaftlich schleifbearbeiten.

Soll eine für das erfindungsgemäße Verfahren eingerichtete Maschine gleichzeitig auch in der Lage sein, eine Schleifbearbeitung mit Hilfe eines Abrichtformwerkzeugs durchzuführen, so kann dies auf einfache Weise dadurch geschehen, dass das Abrichtprofilwerkzeug an mindestens einer seiner freien Stirnseiten nach Art einer Formrolle ausgebildet ist. Ein erfindungsgemäßes Abrichtwerkzeug weist in diesem Fall einerseits eine Rille auf, die im Querschnitt betrachtet an das Negativ des am Umfang der jeweils abzurichtenden Schleifscheibe abzubildenden Profils angepasst ist. Die Begrenzungsflächen der Rille sind dabei in an sich bekannter Weise mit für den Abrichtprozess ausreichend harten Partikeln, wie Diamantpartikeln oder desgleichen, besetzt. Im Fall, dass das Abrichtprofilwerkzeug als Abrichtprofilrolle ausgebildet ist, läuft die Rille um seinen Umfang um.

Andererseits ist das erfindungsgemäße Abrichtwerkzeug mindestens in einem Randbereich seiner einen als Formwerkzeug dienenden Stirnseite mit ausreichend harten Partikeln besetzt. Diese Stirnseite des erfindungsgemäßen Abrichtprofilwerkzeugs dient - eine entsprechende Beweglichkeit und Steuerung der Lagerung des Abrichtprofilwerkzeugs in der jeweiligen Vorrichtung vorausgesetzt - nach Art eines reinen, aus dem Stand der Technik bekannten Abrichtformwerkzeugs, bei dem das an der abzurichtenden Schleifscheibe abzubildende Profil im Wesentlichen durch die Bewegung des Abrichtwerkzeugs, also hier des in erfindungsgemäßer Weise an einem Abrichtprofilwerkzeug zusätzlich ausgebildeten Formwerkzeugteils, entlang des Profils erzeugt wird.

Indem beide Stirnseiten des Abrichtprofilwerkzeugs in diesem Sinne als Formwerkzeug ausgestaltet sind, können beide Seiten des Schleifscheibenprofils bearbeitet werden, ohne dass dazu ein Umspannen und Umschwenken des Abrichtprofilwerkzeugs erforderlich ist.

Nachfolgend wird die Erfindung anhand von Ausführungsbeispielen näher erläutert. Es zeigen:

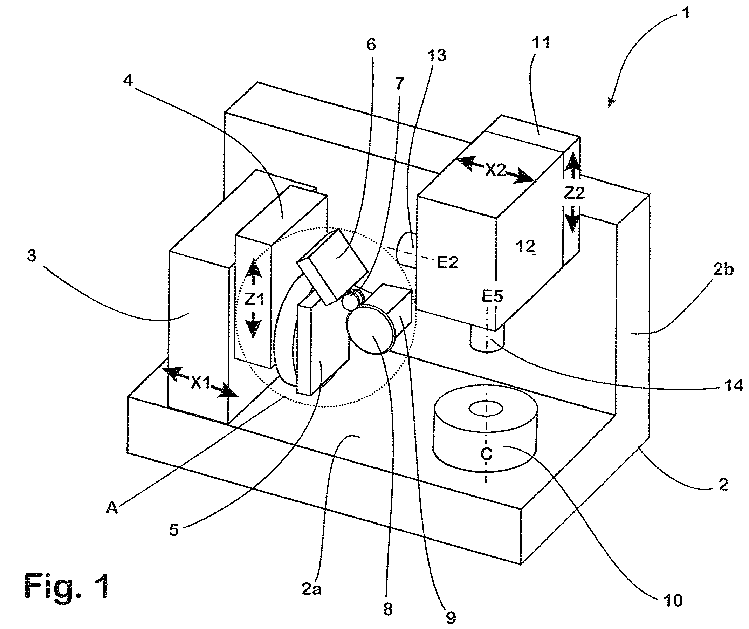

- Fig. 1: eine Vorrichtung zum Schleifbearbeiten der Außenverzahnung eines Zahnrads;

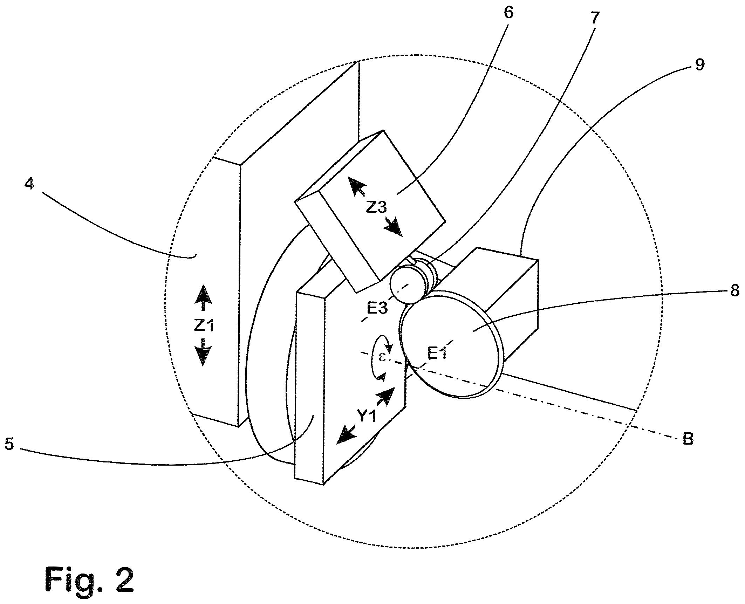

- Fig. 2: eine vergrößerte Darstellung des Ausschnitts A von Fig. 1;
- Fig. 3: ein Diagramm, in dem die Profilwinkelabweichung f_{Hα} über den jeweils aktuellen Durchmesser dₐ₀ einer Schleifscheibe aufgetragen ist;

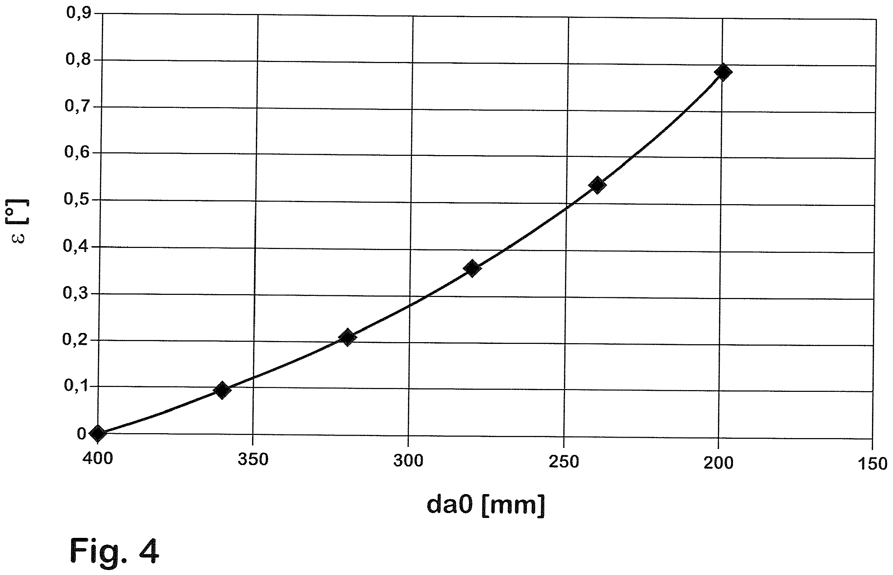

- Fig. 4: ein Diagramm, in dem der Schwenkwinkel ε über den jeweils aktuellen Durchmesser dₐ₀ einer Schleifscheibe aufgetragen ist.

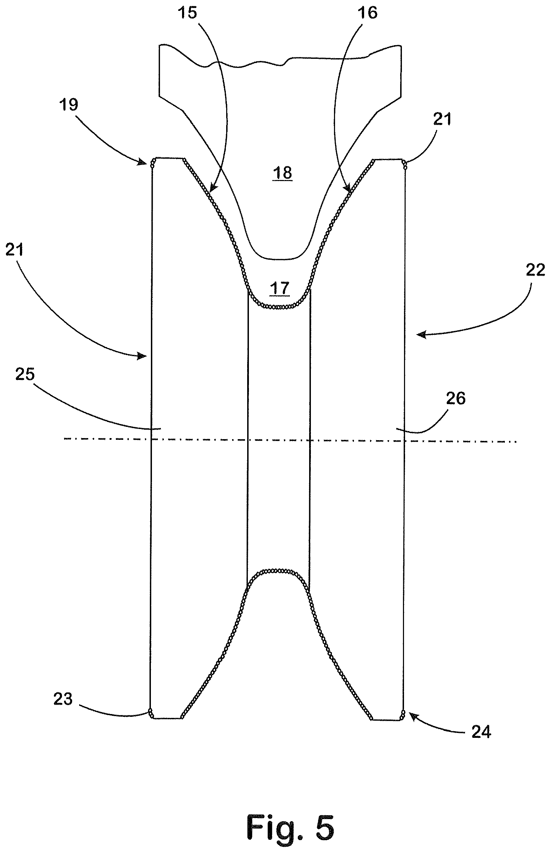

- Fig. 5: ein als Abrichtprofilrolle ausgebildetes Abrichtprofilwerkzeug in einer seitlichen Ansicht.

Die Vorrichtung 1 zum Schleifbearbeiten der Außenverzahnung eines außenverzahnten Zahnrads umfasst ein im Schnitt L-förmiges Maschinenbett 2, auf dessen horizontal ausgerichteten Abschnitt 2a ein Fahrständer 3 angeordnet ist, der mittels eines Stellmotors in einer horizontalen Zustellachse X1 entlang einer auf dem Maschinenbett 2 angeordneten, hier der Übersichtlichkeit halber nicht gezeigten Horizontalführung linear verfahrbar ist.

Der Fahrständer 3 trägt an seiner einen Stirnseite einen Support 4, der mittels eines Stellmotors entlang einer hier der Übersichtlichkeit halber ebenso nicht gezeigten, an der einen Stirnseite des Fahrständers 3 angeordneten Vertikalführung in eine senkrecht zur horizontalen Zustellachse X1 ausgerichtete vertikale Richtung Z1 linear verfahrbar ist.

An der vom Fahrständer 3 abgewandten Stirnseite des Supports 4 ist ein weiterer Support 5 angeordnet, der um eine achsparallel zur horizontalen Zustellachse X1 ausgerichtete Schwenkachse B schwenkbar und in eine orthogonal zur ersten horizontalen Zustellachse X1 ausgerichteten zweiten horizontalen Bewegungsrichtung Y1 linear verschiebbar ist.

Der Support 5 trägt einen Abrichtrollenträger 6, der entlang einer ebenfalls nicht gezeigten, an der Oberseite des Supports 5 angeordneten und nach oben und in Richtung des zweiten Supports 4 geneigten Führung in eine Bewegungsrichtung Z3 linear verschiebbar ist, deren Horizontalprojektion achsparallel zur horizontalen Zustellachse X1 und deren Vertikalprojektion achsparallel zur vertikalen Richtung Z1 ausgerichtet ist. Der Abrichtrollenträger 6 selbst trägt wiederum ein als Abrichtprofilrolle 7 ausgebildetes Abrichtprofilwerkzeug. Die Abrichtprofilrolle 7 ist durch einen von dem Abrichtrollenträger 6 ebenfalls getragenen, hier jedoch im Einzelnen nicht dargestellten Drehantrieb um eine quer zur horizontalen Zustellachse X1 ausgerichtete Abrichterachse E3 rotierend angetrieben.

Des Weiteren ist an dem um die Schwenkachse B verschwenkbaren Support 5 eine Schleifscheibe 8 gelagert, die von einem an der vom zweiten Support 4 abgewandten Stirnseite des dritten Supports 5 befestigten Drehantrieb 9 um eine achsparallel zur Drehachse E3 ausgerichtete Drehachse E1 rotierend angetrieben ist.

Im Bereich des von dem Fahrständer 3 abgewandten Endes des horizontalen Abschnitts 2a des Maschinenbetts 2 ist eine Werkstückaufnahme 10 vorgesehen, die um eine vertikal ausgerichtete Drehachse C angetrieben ist.

Im oberen Bereich des vertikal ausgerichteten Abschnitts 2b des Maschinenbetts 2 ist eine sich über die Breite B des Maschinenbetts 2 erstreckende, hier ebenfalls nicht gezeigte Linearführung ausgebildet, entlang der ein Zusatzsupport 11 in eine achsparallel zur horizontalen Zustellachse X1 ausgerichtete horizontale Bewegungsrichtung X2 verschiebbar ist. An dem Zusatzsupport 11 ist in einer achsparallel zur vertikalen Bewegungsrichtung Z1 ausgerichteten vertikalen Bewegungsrichtung Z2 ein verschiebbarer Antrieb 12 gelagert. Der Antrieb 12 treibt ein zusätzliches, an der der Werkstückaufnahme 10 zugeordneten Seite des Antriebs angeordnetes Schleifwerkzeug 13 um eine Drehachse E5 an, die achsparallel zur Drehachse C ausgerichtet ist. Darüber hinaus treibt der Antrieb 12 ein zweites zusätzliches Schleifwerkzeug 14 drehend an, das an der zum Fahrständer 3 ausgerichteten Seite des Antriebs 12 angeordnet ist.

Während die Schleifscheibe 8 zum Schleifen der die Zahnlücken des zu schleifenden Zahnrads jeweils begrenzenden Zahnflanken vorgesehen ist, können die zusätzlichen Schleifwerkzeuge 13,14 zum Schleifen der Stirnseiten oder anderer Abschnitte des betreffenden Zahnrads eingesetzt werden.

Die zum Abrichten der Schleifscheibe 8 vorgesehene Abrichtprofilrolle 7 begrenzt mit ihren stirnseitigen Flanken 15,16 eine zentral angeordnete umlaufende Rille 17, die das Negativprofil des am Umfang der Schleifscheibe 8 abzubildenden Profils 18 darstellt. Die in bekannter Weise mit Diamant- oder Hartstoffpartikeln besetzten, die Rille 17 begrenzenden Flanken 15,16 der Abrichtprofilrolle 7 sind dabei spiegelsymmetrisch zueinander so geformt, dass die Form der Rille 17 im Querschnitt der Form der Zahnlücke zwischen zwei Zähnen des jeweils schleifzubearbeitenden Zahnrads entspricht.

In ihren Umfangsrandbereichen 19,20 sind die Stirnseiten 21,22 der Abrichtprofilrolle 7 zusätzlich mit Diamant- oder Hartstoffpartikeln 23,24 belegt. Dabei sind die Umfangsrandbereiche 19,20 nach Art der Umfangsrandbereiche einer Formrolle ausgebildet, wie sie üblicherweise alleine, d.h. nicht in der erfindungsgemäß vorgesehenen Kombination mit einer Abrichtprofilrolle zum Abrichten eingesetzt werden.

Wird die Abrichtprofilrolle 7 im Sinne einer konventionellen Profilrolle eingesetzt, so wird die Abrichtprofilrolle 7 in Z3-Richtung auf die Schleifscheibe 8 bei rotierender Schleifscheibe 8 und rotierender Abrichtprofilrolle 7 zugestellt, bis das Profil 18 der Schleifscheibe 8 vollständig in der Rille 17 der Abrichtprofilrolle 7 sitzt, das Profil 18 also die durch die Form der Rille 17 vorgegebene Form angenommen hat. Die an den Stirnseiten 21,22 der Abrichtprofilrolle 7 ausgebildeten Formrollenteile 25,26 bleiben dabei ungenutzt.

Während die Abrichtprofilrolle 7 über die Form der ihre Rille 17 begrenzenden Flanken 15,16 das Profil 18 der Schleifscheibe 8 bestimmt, lässt sich mit den an den Stirnseiten 21,22 der Abrichtprofilrolle 7 ausgebildeten Formrollenteilen 25,26 die Form des an der Schleifscheibe 8 abzubildenden Profils 18 durch eine geeignete Bewegung der Abrichtprofilrolle 7 in die X1-,Z1-,Y1- und Z3-Richtung ebenfalls erzeugen. In diesem Fall befindet sich dann jeweils einer der Umfangsrandbereiche 19,20 in Eingriff mit der abzurichtenden Schleifscheibe 8, während die Rille 17 ungenutzt bleibt.

Zum Abrichten kann die Abrichtprofilrolle 7 durch geeignete Verstellung in Z3-Richtung während des Schleifbetriebes laufend in Eingriff mit der Schleifscheibe 8 gehalten oder in bestimmten Zeitabständen zum bei laufenden Schleifbetrieb durchgeführten Abrichten zeitweilig mit der Schleifscheibe in Kontakt gebracht werden.

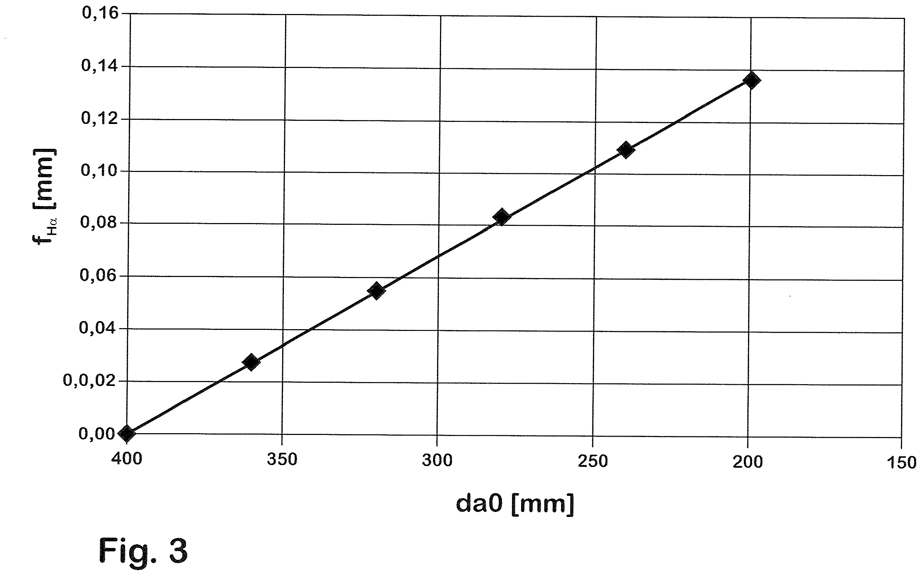

Der Durchmesser der Schleifscheibe 8 nimmt im Zuge der Schleifbearbeitung aufgrund unvermeidbaren Verschleißes laufend ab. Wie in Fig. 3 für eine Schleifscheibe, deren Durchmesser dₐ₀ im Neuzustand 400 mm betrug, dargestellt, ergibt sich mit zunehmender Durchmesserverringerung eine immer größere Profilwinkelabweichung f_{Hα}.

Diese Profilwinkelabweichung f_{Hα} kann durch eine Veränderung des Schwenkwinkels ε kompensiert werden, um den der Support 5 mit der von ihm getragenen Abrichtprofilrolle 7 und Schleifscheibe 8 um die Schwenkachse B verschwenkt sind. Ausgehend von der Schwenkstellung bei Neuzustand der Schleifscheibe 8 ist der Schwenkwinkel ε dabei zunehmend größer einzustellen.

In Tabelle 1 sind für eine Schleifscheibe 8 mit
- einem Normalmodul mₙ von 16 mm,
- einem Normaleingriffswinkel αₙ von 20°,
- einer Zähnezahl z von 20,
- einem Profilverschiebungsfaktor x von 0,5,
   und
- einem Durchmesser dₐ₀ im Neuzustand von 400 mm,
bis zu einem Verschleißzustand, bei der der Durchmesser der Schleifscheibe 8 nur noch 200 mm beträgt, in fünf Stufen der jeweilige Durchmesser dₐ₀, die absolute Abnahme Δdₐ₀ des Durchmessers dₐ₀, die Profilwinkelabweichung f_{Hα}. der zur Kompensation der Profilwinkelabweichung f_{Hα} jeweils einzustellende, rechnerisch ermittelte Schwenkwinkel ε und die jeweilige absolute Änderung Δε des Schwenkwinkels ε angegeben.

**Tabelle 1**

| dₐ₀ | Adₐ₀ | f_{Hα} | ε | Δε |
|---|---|---|---|---|
| [mm] | [mm] | [mm] | [°] | [°] |
| 400 | 0 | 0 | 1, 68 | 0 |
| 360 | 40 | 0,028 | 1,78 | 0,10 |
| 320 | 80 | 0,055 | 1,90 | 0,22 |
| 280 | 120 | 0,083 | 2,04 | 0,36 |
| 240 | 160 | 0,11 | 2,22 | 0,54 |
| 200 | 200 | 0,137 | 2,47 | 0,79 |

### BEZUGSZEICHEN

- 1: Vorrichtung zum Schleifbearbeiten der Außenverzahnung des Werkstücks W
- 2: Maschinenbett
- 2a: horizontal ausgerichteter Abschnitt des Maschinenbetts 2
- 2b: vertikal ausgerichteter Abschnitt des Maschinenbetts 2
- 3: Fahrständer
- 4: Support
- 5: Support
- 6: Abrichtrollenträger
- 7: Abrichtprofilrolle
- 8: Schleifscheibe
- 9: Drehantrieb für die Schleifscheibe 8
- 10: Werkstückaufnahme
- 11: Zusatzsupport
- 12: Antrieb
- 13,14: Schleifwerkzeuge
- 15,16: Flanken der Abrichtprofilrolle 7
- 17: Rille
- 18: Profil
- 19,20: Umfangsrandbereiche
- 21,22: Stirnseiten der Abrichtprofilrolle 7
- 23,24: Diamant- oder Hartstoffpartikel
- 25,26: Formrollenteile der Abrichtprofilrolle 7

- ε: Schwenkwinkel
- B: Schwenkachse
- C: Drehachse der Werkstückaufnahme 10
- E1: Drehachse der Schleifscheibe 8
- E2: Drehachse des Schleifwerkzeugs 14
- E3: Abrichterachse
- E5: Drehachse des Schleifwerkzeugs 13
- X1: horizontal ausgerichtete Zustellachse
- X2: horizontal ausgerichtete Bewegungsrichtung
- Y1: orthogonal zur Zustellachse X1 und horizontal ausgerichtete Bewegungsrichtung
- Z1: vertikal ausgerichtete Bewegungsrichtung
- Z2: vertikal ausgerichtete Bewegungsrichtung
- Z3: schräg nach oben bzw. unten weisende Bewegungsrichtung

## Patentansprüche

1. Verfahren zum Schleifbearbeiten von einer als Außen- oder Innenverzahnung ausgebildeten Verzahnung eines Werkstücks, bei dem eine um eine Werkzeugdrehachse (E1) rotierende Schleifscheibe (8) mit einem an ihrem Umfang ausgeformten Profil (18) durch Verstellung entlang einer quer zur Werkzeugdrehachse (E1) ausgerichteten Zustellachse (X1) in schleifenden Eingriff mit mindestens einem der jeweils eine Zahnlücke der Verzahnung begrenzenden Zähne des Werkstücks gebracht wird und bei dem das Profil (18) der Schleifscheibe (8) bei laufender Schleifbearbeitung mittels eines in Eingriff mit der Schleifscheibe (8) gebrachten Abrichtprofilwerkzeugs (7) abgerichtet wird, wobei die Schleifscheibe (8) um eine Schwenkachse (B) verschwenkbar ist, die achsparallel zu der Zustellachse (X1) ausgerichtet ist, **dadurch gekennzeichnet, dass** ausgehend von der Schwenkstellung bei Neuzustand der Schleifscheibe (8) nach einem Abrichtvorgang oder mehreren Abrichtvorgängen der Schwenkwinkel (ε) um die Schwenkachse (B) in Abhängigkeit von der Verminderung des Schleifscheibendurchmessers zunehmend größer eingestellt wird, um dadurch die Profilwinkelabweichungen, die durch die Verkleinerung des Schleifscheibendurchmessers entstehen, zu kompensieren.

2. Verfahren nach Anspruch 1, **dadurch gekennzeichnet, dass** das Abrichtprofilwerkzeug als eine um eine Abrichterachse (E3) rotierend angetriebene Abrichtprofilrolle (7) ausgebildet ist.

3. Verfahren nach einem der voranstehenden Ansprüche, **dadurch gekennzeichnet, dass** das Abrichtprofilwerkzeug (7) und die Schleifscheibe (8) gemeinsam um die Schwenkachse (B) verschwenkt werden.

4. Verfahren nach einem der voranstehenden Ansprüche, **dadurch gekennzeichnet, dass** das Abrichtprofilwerkzeug (7) im laufenden Schleifbetrieb kontinuierlich in Eingriff mit der Schleifscheibe (8) gehalten wird.

5. Verfahren nach Anspruch 1 oder 2, **dadurch gekennzeichnet, dass** das Abrichtprofilwerkzeug (7) im Schleifbetrieb diskontinuierlich in Eingriff mit der Schleifscheibe (8) gehalten wird.

6. Verfahren nach einem der voranstehenden Ansprüche, **dadurch gekennzeichnet, dass** das Abrichtprofilwerkzeug (7) an mindestens einer seiner freien Stirnseiten (21,22) nach Art eines Formwerkzeugs ausgebildet ist.

7. Verfahren nach Anspruch 5, **dadurch gekennzeichnet, dass** beide Stirnseiten (21,22) des Abrichtprofilwerkzeugs (7) nach Art eines Formwerkzeugs ausgebildet sind.

## Claims

1. Method of grinding the teeth of an external or internally toothed workpiece, in which a grinding wheel (8) rotating about a tool rotation axis (E1) and having a profile (18) formed on its circumference is brought into grinding engagement with at least one of the teeth of the workpiece, said tooth respectively delimiting a tooth space of the teeth, being brought into this engagement by adjustment along a feed axis (X1) aligned transversely to the tool rotation axis (E1), and in which the profile (18) of the grinding wheel (8) is dressed during grinding by means of a dressing profile tool (7) which is brought into engagement with the grinding wheel (8), wherein the grinding wheel (8) is pivotable about a pivot axis (B) aligned axially parallel to the feed axis (XI), **characterised in that**, starting from the pivoting position with the grinding wheel (8) in a new state after a dressing operation or several dressing operations, the pivot angle (ε) about the pivot axis (B) is set to become progressively larger as a function of the reduction of the grinding wheel diameter, thereby compensating for the profile angle deviations caused by the reduction of the grinding wheel diameter.

2. Method according to claim 1, **characterised in that** the dressing profile tool is formed as a dressing profile roller (7) rotationally driven about a dressing axis (E3) .

3. Method according to any one of the preceding claims, **characterised in that** the dressing profile tool (7) and the grinding wheel (8) are pivoted together about the pivot axis (B).

4. Method according to any one of the preceding claims, **characterised in that** the dressing profile tool (7) is held in continuous engagement with the grinding wheel (8) during the grinding operation.

5. Method according to claim 1 or 2, **characterised in that** the dressing profile tool (7) is held in discontinuous engagement with the grinding wheel (8) during the grinding operation.

6. Method according to any one of the preceding claims, **characterised in that** the dressing profile tool (7) is designed on at least one of its free end faces (21, 22) in the form of a moulding tool.

7. Method according to claim 5, **characterised in that** both end faces (21, 22) of the dressing profile tool (7) are designed in the form of a moulding tool.

## Revendications

1. Procédé de traitement par abrasion d'une denture formée comme denture extérieure ou comme denture intérieure d'une pièce, dans lequel procédé un disque abrasif (8), en rotation autour d'un axe d'outil (E1) et comportant un profil (18) formé au niveau de son pourtour, est amené en prise abrasive avec au moins l'une des dents de la pièce à usiner délimitant respectivement un entredent de la denture par positionnement le long d'un axe de positionnement (X1) orienté transversalement par rapport à l'axe d'outil (E1) et dans lequel procédé le profil (18) du disque abrasif (8) est dressé durant le traitement par abrasion au moyen d'un outil profilé de dressage (7) amené en prise avec le disque abrasif (8), le disque abrasif (8) pouvant pivoter autour d'un axe de pivotement (B) qui est orienté parallèlement à l'axe de positionnement (X1), **caractérisé en ce qu'**à partir de la position de pivotement à l'état neuf du disque abrasif (8), l'angle de pivotement (ε) autour de l'axe de pivotement (B) est réglé de plus en plus grand en fonction de la diminution du diamètre du disque abrasif après une opération de dressage ou plusieurs opérations de dressage, afin de compenser ainsi les écarts d'angle de profil qui résultent de la réduction du diamètre du disque abrasif.

2. Procédé selon la revendication 1, **caractérisé en ce que** l'outil profilé de dressage est réalisé sous la forme d'un rouleau profilé de dressage (7) entraîné en rotation autour d'un axe de dressage (E3).

3. Procédé selon l'une des revendications précédentes, **caractérisé en ce que** l'outil profilé de dressage (7) et le disque abrasif (8) pivotent ensemble autour de l'axe de pivotement (B).

4. Procédé selon l'une des revendications précédentes, **caractérisé en ce que** l'outil profilé de dressage (7) est continuellement maintenu en prise avec le disque abrasif (8) au cours du traitement par abrasion.

5. Procédé selon la revendication 1 ou 2, **caractérisé en ce que** l'outil profilé de dressage (7) est maintenu en prise par intermittence avec le disque abrasif (8) au cours du traitement par abrasion.

6. Procédé selon l'une des revendications précédentes, **caractérisé en ce que** l'outil profilé de dressage (7) est configuré à la manière d'un outil de formage au niveau d'au moins l'un de ses côtés frontaux (21, 22) libres.

7. Procédé selon la revendication 5, **caractérisé en ce que** les deux côtés frontaux (21, 22) de l'outil profilé de dressage (7) sont configurés à la manière d'un outil de formage.
